# EUROPÄISCHE PATENTSCHRIFT

(11) **EP 1 646 593 B1**
(45) Veröffentlichungstag und Bekanntmachung des Hinweises auf die Patenterteilung: **29.11.2006**
(21) Anmeldenummer: 04737375.8
(22) Anmeldetag: 09.07.2004
(51) Int. Cl.: C04B 28/02, C04B 14/04

(54) **FESTBETON SOWIE FRISCHBETON ZUR HERSTELLUNG EINES FESTBETONS UND VERWENDUNG EINES BETONS ZUR HERSTELLUNG EINES BAUTEILES MIT HÖHERER TEMPERATURBESTÄNDIGKEIT**
HARDENED CONCRETE AND FRESH CONCRETE FOR PRODUCING HARDENED CONCRETE AND USE OF A CONCRETE FOR PRODUCING A STRUCTURAL COMPONENT WITH A HIGH TEMPERATURE RESISTANCE
BETON DURCI ET BETON FRAIS POUR LA PRODUCTION DE BETON DURCI, ET UTILISATION D'UN BETON POUR LA PRODUCTION D'UN ELEMENT DE CONSTRUCTION PRESENTANT UNE RESISTANCE THERMIQUE PLUS ELEVEE

(30) Priorität: 11.07.2003 AT 10692003
(43) Veröffentlichungstag der Anmeldung: 19.04.2006
(73) Patentinhaber: Schotter- und Betonwerk Karl SCHWARZL Betriebsgesellschaft m.b.H., 8141 Unterpremstätten (AT)
(72) Erfinder: MAYER, Anton, A-8700 Leoben (AT)
(74) Vertreter: Widtmann, Georg
(86) Internationale Anmeldenummer: PCT/AT2004/000245
(87) Internationale Veröffentlichungsnummer: WO 2005/005339

(56) Entgegenhaltungen:
- EP-A- 0 171 377
- DE-A- 3 630 962
- DE-A- 19 861 060
- GB-A- 1 002 368
- US-A- 2 315 198

## Beschreibung

Die Erfindung bezieht sich auf einen Festbeton, insbesondere einen Betonbauteil, mit einer Mischung aus abgebundenen hydraulischen und/oder latenthydraulischen Bindemitteln sowie Zuschlagstoffen, Fasern aus Thermoplasten, Polymeren, Zellstoff, Papier od. dgl., gegebenenfalls Verflüssigern, Dispergatoren u. dgl. Ein weiterer Gegenstand der Erfindung ist ein Frischbeton zur Herstellung eines Festbetons mit einem hydraulischen und/oder latenthydraulischen Bindemittel und Zuschlagstoffen sowie die Verwendung eines Festbetons und/oder Frischbetons zur Herstellung eines Bauteiles mit höherer Temperaturbeständigkeit.

Aufgrund der einfachen Verarbeitbarkeit von Beton ist der Einsatz desselben immer höher geworden. Nachteilig bei Beton ist, dass die erforderlichen Festigkeitswerte mit Ausnahme beim Einsatz von speziellen Bindemitteln erst nach Wochen erreicht werden. So hoch auch die Druckfestigkeitswerte sind, so gering ist die Zugfestigkeit. Um die Zugfestigkeit zu erhöhen, ist es bekannt, eine oder auch nicht vorgespannte Bewehrung und/oder faserartige Zusätze einzusetzen.

Eine weitere Eigenschaft von Beton ist sehr mangelhaft, u. zw., die Beständigkeit bei höherer Temperatur. Es fehlt nicht an Versuchen, die Temperaturbeständigkeit dadurch zu erhöhen, dass das Bindemittel als solches in seinem Aufbau geändert wird, um ein Zerstören desselben bei höherer Temperatur zu vermeiden. Auch ist es bekannt, Zusätze vorzusehen, die den Aufbau des Festbetons bei Temperaturbeanspruchung, beispielsweise bei einem Brand, verändern. Ein typischer Vertreter dafür sind die Fasern aus thermoplastischen Kunststoffen, wie Polyethylen, Polypropylen, durch dessen Herausschmelzen eine offenporige Struktur des Festbetons eintritt, womit der Wasserdampf bei Temperaturen von über 100°C durch das entstandene Kapillarporensystem entweichen kann.

Der vorliegenden Erfindung ist zur Aufgabe gestellt, einen Festbeton zu schaffen, welcher unter Beibehaltung der Druckfestigkeitswerte und der üblichen Qualitätsanforderungen, selbst bei Einsatz von konventionellen hydraulischen Bindemitteln, eine höhere Temperaturbeständigkeit als die konventionellen Festbetone aufweist. Weiters soll der entsprechende Frischbeton auch als Spritzbeton verarbeitet werden können aber auch pumpbar sein. Die Erhärtungsgeschwindigkeit soll nicht verschlechtert werden. Eine weitere Aufgabe besteht darin, dass die Bestandteile der Mischung für den Festbeton in ausreichenden Mengen vorliegen.

Der erfindungsgemäße Festbeton, insbesondere Betonbauteil, mit einer Mischung 10,0 Gew. % bis 25,0 Gew-% berechnet ohne Bewehrung, abgebundenen hydraulischen und/oder latenthydraulischen Bindemitteln, z. B. Portlandzement, Hochofenzement od. dgl., 75,0 Gew.-% bis 90,0 Gew.-% berechnet ohne Bewehrung, Zuschlagstoffen, Fasern, insbesondere Fasern von 0,3 bis 3,0 Gew.-%o aus Thermoplasten, Polymeren, Zellstoff, Papier od. dgl., gegebenenfalls Verflüssigern, Dispergatoren od. dgl., und gegebenenfalls mit einer Bewehrung, besteht im Wesentlichen darin, dass die Summe der Zuschlagstoffe folgende Zusammensetzung

| | | |
|---|---|---|
| MgO | 25,0 bis 50,0 Gew.-%, | insbesondere 30,0 bis 40,0 Gew.-% |
| SiO₂ | 30,0 bis 55,0 Gew.-%, | insbesondere 40,0 bis 45,0 Gew.-% |
| Fe₂O₃ | 5,0 bis 15,0 Gew.-% | |
| Cr₂O₃ | max. 1,0 Gew.-% | |
| Al₂O₃ | max. 1,0 Gew.-% | |
| freies SiO₂ als Quarz Beimengungen und Fasern | max. 5,0 Gew.-%, | insbesondere max. 1,0 Gew.-% Rest |
| | | insbesondere 0,4 Gew.-%o bis 1,0 Gew.-%o |

aufweist.

Es war durchaus überraschend, dass Stoffe mit einer derartigen Zusammensetzung, die bislang hauptsächlich wegen ihrer hohen Elastizität, Druckfestigkeit und pflanzenwuchshemmenden Wirkung eingesetzt wurden, als Zuschlagstoff einem Beton eine hohe Temperaturbeständigkeit verleihen können. Mit dieser Maßnahme wurde berücksichtigt, dass nicht nur die hohe Temperaturbeständigkeit der Bindemittel von Bedeutung ist, sondern sehr wohl die der Zuschlagstoffe eine größere Bedeutung einnehmen, da dieselben im Festbeton in einer wesentlich größeren Menge als die Bindemittel vorliegen. Bei Zuschlagstoffen mit der oben angeführten Zusammensetzung liegen Gemenge aus Magnesiumeisensilikaten, Magnesiumeisenhydrosilikaten und anderen Magnesiumverbindungen vor. Von besonderer Bedeutung ist auch, dass der Gehalt an freiem SiO₂ nicht überschritten wird, da bei 575°C eine spontane aber auch reversible Umwandlung des β-Quarzes in die α-Modifikation erfolgt, welche bei Hitzeeinwirkung durch eine Volumsvergrößerung und dann wiederum Volumsverringerung gekennzeichnet ist, so dass bereits der Quarz in größeren Mengen eine Zerstörung des Festbetons bedingt. Weiters ist durch den geringen Gehalt an freiem Quarz sichergestellt, dass gesundheitliche Gefährdungen in Form der Silikose bei dem verarbeitenden Personal besonders gering gehalten werden können. Es war durchaus überraschend, dass ein Gestein mit der oben angeführten Zusammensetzung auch als Zuschlagstoff für Beton eingesetzt werden kann und dies in Anbetracht des hohen Gewichtes von ca. 2.500 kg/m³ bis 3.500 kg/m³ und dass durch einen derartigen Zuschlagstoff, selbst unter Beibehaltung konventioneller hydraulischer Bindemittel, eine hohe Temperaturbeständigkeit erreicht werden kann. Weiters liegen derartige Gemenge aus Magnesiumeisenhydrosilikaten mit Magnesiumeisensilikaten in der Regel nicht als Geröll oder Geschiebe oder anderes Lockergestein vor, sondern es muß das massive Gestein zerkleinert werden. In Anbetracht der hohen Festigkeit dieses Gesteines ist die Zerkleinerungsarbeit besonders aufwendig, womit ein Vorurteil bestanden hat, einen derartigen Zuschlagstoff aufgrund seiner hohen Festigkeit und Zähigkeit zum Einsatz zu bringen, da der Aufwand für die Gewinnung und Zerkleinerung besonders hoch ist. Dies steht den relativ geringen Kosten für die Aufbereitung bei Sand, Kies, Kalkfelsen, Dolomitfelsen u. dgl. gegenüber. Karbonatische Bestandteile, so wie alle anderen Bestandteile, welche CO₂ abspalten, bewirken ein Herabsetzen der Festigkeit des Betons bei erhöhter Temperatur. Weiters wird die Vergiftungsgefahr, beispielsweise in Tunnels, besonders erhöht, da zwischen dem das Atmen nicht fördernde Kohlendioxid und dem giftigen Kohlenmonoxid ein Gleichgewicht besteht, wobei ca. bei 400°C 100 % Kohlendioxid, hingegen bei 1000°C 100 % Kohlenmonoxid vorliegt. Weiters kann die Gefahr bestehen, dass ein Gemisch aus Luft und Kohlenmonoxid Explosionen bedingen kann. Der erfindungsgemäße Beton ist daher für Tunnels, z. B. als Spritzbeton eingesetzt, besonders geeignet.

Weist zumindest ein Teil, insbesondere 80,0 Gew-% bis 100,0 Gew-%, der Zuschlagstoffe folgende Zusammensetzung

| | | |
|---|---|---|
| MgO | | 30,0 bis 40,0 Gew.-% |
| SiO₂ | | 50,0 bis 55,0 Gew.-% |
| Fe₂O₃ | | 8,0 bis 13,0 Gew.-% |
| Cr₂O₃ | | max. 1,0 Gew.-% |
| Al₂O₃ | | max. 1,0 Gew.-% |
| freies SiO₂ als Quarz Beimengungen | max. 5,0 Gew.-%, Rest | insbesondere max. 1,0 Gew.-% |

auf, so kann ein Festbeton erhalten werden, der besonders hohe Druckfestigkeiten aufweist. Weiters weist ein derartiger Zuschlagstoff eine besonders niedrige thermische Dehnung auf, wobei keine Phasenumwandlungen auftreten, so dass eine im Wesentlichen lineare Abhängigkeit der thermischen Dehnung gegeben ist, womit auch bei Temperaturänderungen keine vorzeitige Zerstörung des Zuschlagstoffes eintritt. Typische Vertreter von Gesteinen mit dieser Zusammensetzung sind der Bronzitfels, Pyroxenite, Dunit und Peridotit mit typischen Mineralkomponenten, wie Bronzit, Enstatit, Olivin u. dgl. Ein weiterer Vorteil besteht darin, dass eine grobkristalline Struktur vorliegt, wodurch das zerkleinerte Gestein relativ kantig bricht und durch eine gegenseitige Abstützung und Verzahnung der Zuschlagstoffe eine zusätzliche Verfestigung erreicht werden kann.

Weist zumindest ein Teil, insbesondere 80,0 Gew.-% bis 100,0 Gew-%, der Zuschlagstoffe folgende Zusammensetzung

| | | |
|---|---|---|
| MgO | 35,0 bis 50,0 Gew.-% | |
| SiO₂ | 45,0 bis 55,0 Gew.-% | |
| Fe₂O₃ | 5,0 bis 15,0 Gew.-% | |
| Cr₂O₃ | max. 1,0 Gew.-% | |
| Al₂O₃ | max. 1,0 Gew.-% | |
| freies SiO₂ als Quarz | max. 5,0 Gew.-%, | insbesondere max. 1,0 Gew.-% |
| Beimengungen | Rest | |

auf, so kann ein vergleichsweise schwerer Festbeton erhalten werden, der ein Raumgewicht von ca. 2.500 kg/m³ bis 2.700 kg/m³ aufweist. Weiters ist ein derartiger Zuschlagstoff, wenn gebrochen, aufgrund der kristallinen Struktur zu kubischen und abgerundeten Körnern brechbar, die besonders leicht in den Zementleim eingebunden werden können, und die Feuerbeständigkeit liegt aufgrund der hohen Schmelztemperatur, u. zw. über 1650°C, besonders hoch.

Enthalten die Zuschlagstoffe 2,5 Gew.-% bis 15,0 Gew.-% Kristallwasser, so erfolgt bei höheren Temperaturen eine zusätzliche Aufnahme von thermischer Energie, welche zur Abspaltung und Verdampfung des in diesen Gesteinszuschlagstoffen besonders günstig gebundenen Kristallwassers und einer damit verbundenen, stark endotherme Reaktion verbraucht wird, wodurch das Eindringvermögen der Hitze sehr stark herabgesetzt wird. Weiters entsteht durch die Abspaltung des Kristallwassers eine besonders feine Mikroporenstruktur, über welche allenfalls noch vorhandenes freies Wasser und weiteres Kristallwasser langsam und ohne größere Destruktionen zu bedingen, entweichen kann. Durch diese Mikroporenstruktur wird überdies ein poröser Stoff geschaffen, der eine geringere Wärmeleitfähigkeit als der ursprünglich vorliegende Beton aufweist, so dass das Eindringen der Hitze in den Betonkörper dadurch noch zusätzlich verringert wird.

Der erfindungsgemäße Frischbeton zur Herstellung von Festbeton, insbesondere eines Betonbauteiles, mit einer Mischung mit 8,0 Gew.-% bis 20,0 Gew-%, insbesondere 12,0 Gew.-% bis 18,0 Gew.-%, hydraulischen und/oder latenthydraulischen Bindemitteln, z. B. Portlandzement, Hochofenzement od. dgl., 75,0 Gew.-% bis 92,0 Gew-% Zuschlagstoffen und einen W/B-Wert 0,40 bis 0,70, vorzugsweise von 0,50 bis 0,65, und Fasern von 0,3 Gew.-%o bis 3,0 Gew.-%o aufweist, besteht im Wesentlichen darin, dass die Summe der Zuschlagstoffe folgende Zusammensetzung

| | | |
|---|---|---|
| MgO | 25,0 bis 50,0 Gew.-%, | insbesondere 30,0 bis 40,0 Gew.-% |
| SiO₂ | 30,0 bis 55,0 Gew.-%, | insbesondere 40,0 bis 45,0 Gew.-% |
| Fe₂O₃ | 5,0 bis 13,0 Gew.-% | |
| Cr₂O₃ | max. 1,0 Gew.-% | |
| Al₂O₃ | max. 1,0 Gew.-% | |
| freies SiO₂ als Quarz | max. 5,0 Gew.-%, | insbesondere max. 1,0 Gew.-% |
| Beimengungen und Fasern | Rest | insbesondere 0,4 Gew.-%o bis 1,0 Gew.-%o |

aufweist. So kann ein Festbeton erhalten werden, der die erfindungsgemäßen Eigenschaften aufweist, zu dessen Verarbeitung alle herkömmlichen Methoden der Verdichtung und Einbringung, z. B. durch Pumpen, Spritzen, Gießen, Schütten u. dgl., ermöglicht sind. Auch das Verdichten durch Rütteln, Stochern, freies Fließen u. dgl. ist möglich.

Weist der Frischbeton zur Herstellung eines Festbetons, insbesondere Betonbauteiles, zumindest zum Teil, insbesondere 80,0 Gew.-% bis 100,0 Gew-%, Zuschlagstoffe folgender Zusammensetzung

| | | |
|---|---|---|
| MgO | 30,0 bis | 40,0 Gew.-% |
| SiO₂ | 50,0 bis | 55,0 Gew.-% |
| Fe₂O₃ | 8,0 bis | 13,0 Gew.-% |
| Cr₂O₃ | max. | 1,0 Gew.-% |
| Al₂O₃ | max. | 1,0 Gew.-% |
| freies SiO₂ als Quarz Beimengungen | max. 5,0 Gew.-%, Rest | insbesondere max. 1,0 Gew.-% |

auf, so kann ein Festbeton erhalten werden, der besonders hohe Druckfestigkeiten besitzt. Weiters weist ein derartiger Zuschlagstoff eine besonders niedrige thermische Dehnung auf, wobei selbst unter Hitzeeinwirkung im Zuschlagstoff keine schädlichen Mineralphasenumwandlungen auftreten, so dass eine im Wesentlichen gleichmäßige Abhängigkeit der thermischen Dehnung gegeben ist, womit auch bei Temperaturänderungen keine vorzeitige Zerstörung des Zuschlagstoffes eintritt. Typische Vertreter von Gesteinen mit dieser Zusammensetzung sind der Bronzitfels, Pyroxenite, Dunit, Peridotit mit typischem Mineralbestand aus Bronzit, Enstatit, Olivin u. dgl. Ein weiterer Vorteil besteht darin, dass eine grobkristalline Struktur vorliegt, wodurch das zerkleinerte Gestein relativ kantig bricht und durch eine gegenseitige Abstützung der Zuschlagstoffe eine zusätzliche Verfestigung erreicht werden kann.

Weist der Frischbeton zur Herstellung eines Festbetons, insbesondere Betonbauteiles, zumindest zum Teil, insbesondere 80,0 Gew.-% bis 100,0 Gew.-%, Zuschlagstoffe folgender Zusammensetzung

| | | |
|---|---|---|
| MgO | 35,0 bis 50,0 Gew.-% | |
| SiO₂ | 45,0 bis 55,0 Gew.-% | |
| Fe₂O₃ | 5,0 bis 15,0 Gew.-% | |
| Cr₂O₃ | max. 1,0 Gew.-% | |
| Al₂O₃ | max. 1,0 Gew.-% | |
| freies SiO₂ als Quarz Beimengungen | max. 5,0 Gew.-%, | insbesondere Rest max. 1,0 Gew.-% |

auf, so kann ein Festbeton erhalten werden, der ein Raumgewicht von ca. 2.500 kg/m³ bis 2.700 kg/m³ aufweist. Weiters ist ein derartiger Zuschlagstoff durch Aufbereitung aufgrund der kristallinen Struktur zu kubischen und abgerundeten Körnern brechbar, die besonders vorteilhaft in den Zementleim eingebunden werden können, und die Feuerbeständigkeit liegt aufgrund der hohen Schmelztemperatur, u. zw. über 1650°C, besonders hoch.

Weist der Frischbeton zur Herstellung eines Festbetons, insbesondere Betonbauteiles, zumindest zum Teil, insbesondere 80,0 Gew.-% bis 100,0 Gew.-%, Zuschlagstoffe auf, die 2,5 Gew.-% bis 15,0 Gew.-% Kristallwasser enthalten, so kann ein Festbeton erhalten werden, welcher bei höheren Temperaturen eine zusätzliche Aufnahme von thermischer Energie, welche zur Abspaltung und Verdampfung des in diesen Gesteinszuschlagstoffen besonders günstig gebundenen Kristallwassers und einer damit verbundenen, stark endotherme Reaktion verbraucht wird, wodurch das Eindringvermögen der Hitze sehr stark herabgesetzt wird. Weiters entsteht durch die Abspaltung des Kristallwassers eine besonders feine Mikroporenstruktur, über welche allenfalls noch vorhandenes freies Wasser und weiteres Kristallwasser langsam und ohne größere Destruktionen zu bedingen, entweichen kann. Durch diese Mikroporenstruktur wird überdies ein poröser Stoff geschaffen, der eine geringere Wärmeleitfähigkeit als der ursprünglich vorliegende Beton aufweist, so dass das Eindringen der Hitze in den Betonkörper dadurch noch zusätzlich verringert wird.

US 2,315,198 offenbart ein wärmebeständiges Baumaterial, in dem neben 15 bis 30 Gew.-% Portlandzement, Magnesiumsilikate wie Olivin oder Dunit verwendet werden.

In der DE 36 30 962 A1 wird eine Feststoffmasse für Spritzbeton beschrieben, welcher zur Aufgabe gestellt ist, dass besonders geringe Rückprallwerte erhalten werden. Diese geringen Rückprallwerte sollen durch die Zugabe von Fasern eintreten, wobei Polymerfasern, Stahlfasern od. dgl. in einer Menge von 0,5 % bis 5,0 %, bezogen auf das Bindemittel, eingesetzt werden sollen.

In der DE 197 50 746 A1 ist ein faserbewehrter Baustoff beschrieben, wobei die Fasern mit elektromagnetischen Wellen ausgerichtet werden sollen, um eine Verstärkung in einer bestimmten Richtung zu erhalten.

Die EP 0 696 559 A1 bezieht sich auf einen Billardtisch, der ein besonders hohes Gewicht aufweist und als Zuschlagstoffe Kiesel aus basaltischem Material oder Baryt aufweist. Um die Wärmedehnung und Alterung bei niedrigen Temperaturen zu verbessern, wird vorgeschlagen, 0,2 %o bis 0,4 %o synthetische Fasern, insbesondere Propylenfasern, der Mischung zuzusetzen.

Die Zusammensetzungen wurden, wie bei Silikaten üblich, als Oxide angegeben.

Im Folgenden wird die Erfindung anhand der Beispiele näher erläutert. Zusätzlich sind mineralogisch-petrographische Bezeichnungen angeführt.

### Vergleichsbeispiel 1:

Es wurde ein Frischbeton mit 14,0 Gew.-% Portlandzement (PZ 275C-TZ2) der Firma Lafarge Perlmoser AG, 3,5 Gew.-% Kraftwerksflugasche Heizkraftwerk Mellach, 0,09 Gew.-% Betonverflüssiger der Firma Betontechnik Ges.m.b.H., 0,008 Gew.-% Luftporenbildner der Firma Betontechnik Ges.m.b.H., 0,4 Gew.-%o Polypropylenfasern mit einem Durchmesser von 5 µm bis 30 µm und einer durchschnittlichen Länge von 6 mm bis 25 mm. Die Wasserzugabe erfolgte bis zu einem W/B-Wert 0,60. Der Rest Flussschotter wies folgende Korngrößenverteilung auf:

| | |
|---|---|
| 0 mm bis 4 mm | 37 Gew.-% |
| 4 mm bis 16 mm | 28 Gew.-% |
| 16 mm bis 32 mm | 35 Gew.-%. |

Der Flußschotter bestand aus zumeist gut gerundeten Gesteinsaggregaten, wobei folgender Mineralbestand bestimmt wurde:

| | |
|---|---|
| Freier Quarz | ca. 50 Gew.-% |
| Kalkstein | ca. 20 Gew.-% |
| Dolomit | ca. 10 Gew.-% |
| div. metamorphe Gesteine, wie Gneis und Schiefer | ca. 10 Gew.-% |
| Gesteine und Minerale unterschiedlichster Art | Rest |

Aus diesem Frischbeton wurden 26 Probekörper, u. zw. Würfel mit einer Kantenlänge 15 x 15 x 15 cm, gefertigt. Die Druckfestigkeit wurde jeweils an drei Prüfkörpern nach sieben Tagen jeweils im arithmetischen Mittel mit 18,2 N/mm² und nach 28 Tagen mit 33,4 N/mm² bestimmt. Nach 28 Tagen Lagerung im Feuchtschrank wurden die Würfel in einem mit Erdgas und Sauerstoff befeuerten Ofen jeweils drei Stunden bei 800°C, 1000°C, 1100°C und 1200°C gelagert. Unmittelbar nach Abkühlung von 1200°C und nach weiteren 24 Stunden, 48 Stunden und nach einer Woche wurde die jeweilige Gewichtsveränderung, das Aussehen bestimmt. Die Druckfestigkeit lag unmittelbar nach der Abkühlung bei rund 5 N/mm² und war nach 24 Stunden als Folge des fortgeschrittenen Zerfalles der Probewürfel nicht mehr messbar.

| Temperatur °C | Gewichtsverlust Gew-% | Aussehen |
|---|---|---|
| 800 | 7,5 | Abplatzungen |
| 1000 | 21,2 | Risse |
| 1100 | 26,4 | Starke Risse |
| 1200 | 26,2 | Starke Risse |
| Unmittelbar nach Abkühlung | 25,4 | Starke Risse |
| Nach 24 Stunden | 18,2 | CaO-Zerfall erkennbar |
| Nach 36 Stunden | 14,5 | Starke Zerfallserscheinungen |
| Nach 1 Woche | 12,2 | Starke Zerfallserscheinungen, Probekörper aufgebläht |

Im Folgenden wird der Temperaturverlauf in der Probe gegen die Zeit in einer Tabelle dargestellt. Die Probe wurde am oberen Ende einer Brennkammer dermaßen angeordnet, dass Proben einen Teil der Ofenraum-Decke bilden, wobei die Temperatur am heißen Ende nach 5 Minuten 1000°C, nach 10 Minuten 1100°C und nach 20 Minuten 1200°C betragen hat. Diese Temperaturen wurden sodann konstant gehalten. Die Temperatur wurde über Thermoelemente bestimmt, die im Frischbeton der Würfel in 30 mm, 50 mm und 100 mm positioniert wurden. Die Messergebnisse sind das arithmetische Mittel von drei Messungen.

| In Minuten | Temperatur in °C | | |
|---|---|---|---|
| | 30 mm | 50 mm | 100 mm |
| 30 | 270 | 150 | 100 |
| 60 | 430 | 270 | 100 |
| 120 | 620 | 480 | 170 |

### Vergleichsbeispiel 2:

Es wurde ein Frischbeton mit 14,0 Gew.-% Portlandzement (PZ 275C-TZ2) der Firma Lafarge Perlmoser AG, 3,5 Gew.-% Kraftwerksflugasche Heizkraftwerk Mellach, 0,09 Gew.-% Betonverflüssiger der Firma Betontechnik Ges.m.b.H., 0,008 Gew.-% Luftporenbildner der Firma Betontechnik Ges.m.b.H., 0,4 Gew.-%o Polypropylenfasern mit einem Durchmesser von 5 µm bis 30 µm und einer durchschnittlichen Länge von 6 mm bis 25 mm. Die Wasserzugabe erfolgte bis zu einem W/B-Wert 0,63. Der Rest Quarzkies wies folgende Korngrößenverteilung auf:

| | |
|---|---|
| 0 mm bis 4 mm | 25 Gew.-% |
| 4 mm bis 8 mm | 20 Gew.-% |
| 8 mm bis 16 mm | 18 Gew.-% |
| 16 mm bis 32 mm | 27 Gew.-% |

Der Quarzkies bestand aus gut gerundeten Gesteinsaggregaten, wobei folgender Mineralbestand bestimmt wurde:

| | |
|---|---|
| Freier Quarz | ca. 80 Gew.-% |
| div. metamorphe Gesteine, wie Gneis und Schiefer | ca. 10 Gew.-% |
| vorwiegend karbonatisches Gestein | Rest |

Aus diesem Frischbeton wurden 26 Probekörper, u. zw. Würfel mit einer Kantenlänge 15 x 15 x 15 cm, gefertigt. Die Druckfestigkeit wurde jeweils an drei Prüfkörpern nach sieben Tagen mit 17,8 N/mm² und nach 28 Tagen mit 32,7 N/mm² jeweils im arithmetischen Mittel bestimmt. Nach 28 Tagen Lagerung im Feuchtschrank wurden die Würfel in einem mit Erdgas und Sauerstoff befeuerten Ofen jeweils drei Stunden bei 800°C, 1000°C, 1100°C und 1200°C gelagert. Nach Lagerung bei 1200°C wurde der jeweilige Gewichtsverlust und das Aussehen festgestellt. Die Druckfestigkeit war nicht bestimmbar, da die Probekörper keine plane Auflagefläche mehr aufwiesen.

| Temperatur °C | Gewichtsverlust Gew.-% | Aussehen |
|---|---|---|
| 800 | 7,8 | Abplatzungen und Risse |
| 1000 | 10,2 | Rissvergrößerung |
| 1100 | 10.2 | Starke Risse, Beulen |
| 1200 | 10,2 | Risse, die teilweise den Würfel durchmessen |
| Nach Abkühlung | 10,2 | 5 bis 7 cm tiefer Zerfall |
| Nach 24 Stunden | 10,2 | 5 bis 7 cm tiefer Zerfall |
| Nach 36 Stunden | 7,9 | 5 bis 7 cm tiefer Zerfall |
| Nach 1 Woche | 8,3 | Bis 10 cm tiefer Zerfall |

Im Folgenden wird der Temperaturverlauf in der Probe gegen die Zeit in einer Tabelle dargestellt. Die Probe wurde am oberen Ende einer Brennkammer angeordnet, wobei die Temperatur am oberen Ende nach 5 Minuten 1000°C, nach 10 Minuten 1100°C und nach 20 Minuten 1200°C betragen hat. Diese Temperatur wurde sodann konstant gehalten.

| In Minuten | Temperatur in °C | | |
|---|---|---|---|
| | 30 mm | 50 mm | 100 mm |
| 30 | 280 | 150 | 100 |
| 60 | 450 | 285 | 110 |
| 120 | 640 | 495 | 180 |

### Beispiel 3:

Es wurde analog zu Vergleichsbeispiel 1 verfahren und ein Frischbeton mit folgenden Bestandteilen erstellt.

| | |
|---|---|
| Zement | 12,0 Gew.-% |
| Flugasche | 2,66 Gew.-% |
| W/B-Wert | 0,61 |
| Luftporenmittel | 0,008 Gew.-% |
| Mikrosilika | - |
| Polypropylenfasern | 0,7 Gew.-%o |

| | | | |
|---|---|---|---|
| Magnesiumeisenhydrosilikat (Dunit) | | 0 bis 4 mm | 39,0 Gew.-% |
| | | 4 bis 16 mm | 21,0 Gew.-% |
| | | 16 bis 32 mm | 21,3 Gew.-% |
| Festigkeit nach | 7 Tagen | 17,8 N/mm² | |
| | 28 Tagen | 28,3 N/mm² | |

Der Frischbeton wies nach ÖNORM B3303 ein Ausbreitmaß von 49,5 cm auf.

Das Magnesiumeisenhydrosilikat als Rest wies folgende chemische Zusammensetzung in Gew.-% auf:

| | |
|---|---|
| SiO₂ | 35,47 |
| Fe₂O₃ | 10,90 |
| Mn₃O₄ | 0,16 |
| Al₂O₃ | 0,25 |
| Cr₂O₃ | 0,34 |
| CaO | 0,40 |
| MgO | 36,80 |
| Glühverlust | 14,75 |
| TiO₂ | Spuren |
| Na₂O | 0,10 |
| K₂O | 0,06 |

Es liegen 14,75 Gew.-% gebundenes Wasser vor.

Der Gewichtsverlust und die Änderung des Aussehens der Würfel gegen die Temperatur und sodann gegen die Zeit und nach Lagerung bei 1200°C waren wie folgt:

| Temperatur °C | Gewichtsverlust Gew.-% | Aussehen |
|---|---|---|
| 800 | 14,0 | Leichte Abplatzungen sichtbar |
| 1000 | 15,0 | Leichte Abplatzungen sichtbar |
| 1100 | 14,0 | Kleine Risse |
| 1200 | 14,0 | Deutliche Risse |
| Nach Abkühlung | 14,0 | Deutliche Risse |
| Nach 24 Stunden | 14,0 | Deutliche Risse |
| Nach 36 Stunden | 14,0 | Deutliche Risse |
| Nach 1 Woche | 14,0 | Deutliche Risse |

Der Temperaturverlauf in den Würfeln war wie folgt:

| In Minuten | Temperatur in °C | | |
|---|---|---|---|
| | 30 mm | 50 mm | 100 mm |
| 30 | 180 | 110 | 50 |
| 60 | 300 | 200 | 90 |
| 120 | 435 | 300 | 110 |

### Beispiel 4:

Es wurde analog Vergleichsbeispiel 1 verfahren.

Es wurde ein Magnesiumeisenhydrosilikat gemäß Beispiel 3 eingesetzt.

Dem Frischbeton gemäß Beispiel 3 wurden 0,35 Gew.-% Mikrosilika zugemischt.

| | |
|---|---|
| Festigkeit nach | 7 Tagen 18,2 N/mm² |
| | 28 Tagen 30,2 N/mm² |

Der Frischbeton wies nach ÖNORM B3303 ein Ausbreitmaß von 52 cm auf. Das Verhalten, Gewichtsverlust und Aussehen sowie Temperatur in den Proben wiesen keine Unterschiede zu Beispiel 3 auf.

### Beispiel 5:

Es wurde gemäß Vergleichsbeispiel 1 verfahren und ein Frischbeton mit folgenden Bestandteilen erstellt.

| | |
|---|---|
| Zement | 11,73 Gew.-% |
| Flugasche | 2,60 Gew.-% |
| W/B-Wert | 0,63 |
| Luftporenmittel | 0,01 Gew.-% |
| Mikrosilika | 0,35 Gew.-% |
| Polypropylenfasern | 0,4 Gew.-%o |

| | | | |
|---|---|---|---|
| Magnesiumeisenhydrosilikat (Bronzitfels), der Rest | | 0 bis 4 mm | 25,95 Gew.-% |
| | | 2 bis 8 mm | 7,90 Gew.-% |
| | | 4 bis 16 mm | 23,50 Gew.-% |
| | | 16 bis 32 mm | 18,66 Gew.-% |
| Festigkeit nach | 7 Tagen | 19 N/mm² | |
| | 28 Tagen | 36 N/mm² | |

Das Ausbreitmaß gemäß ÖNORM B3303 betrug 52 cm.

Der Zuschlagstoff (Bronzitfels) wies folgende chemische Zusammensetzung in Gew.-% auf:

| | |
|---|---|
| SiO₂ | 51,41 |
| Fe₂O₃ | 10,54 |
| Mn₃O₄ | 0,22 |
| Al₂O₃ | 0,63 |
| Cr₂O₃ | 0,39 |
| CaO | 0,75 |
| MgO | 32,80 |
| Glühverlust | 2,29 |
| TiO₂ | Spuren |
| Na₂O | 0,22 |
| K₂O | 0,12 |

Der Gewichtsverlust und die Änderung des Aussehens der Würfel gegen die Temperatur und sodann gegen die Zeit sowie bei einer Abkühlung von 1200°C waren wie folgt:

| Temperatur °C | Gewichtsverlust Gew.-% | Aussehen |
|---|---|---|
| 800 | 6,0 | Keine Abplatzungen, keine Risse |
| 1000 | 6,0 | Keine Abplatzungen, keine Risse |
| 1100 | 6,5 | Keine Abplatzungen, keine Risse |
| 1200 | 6,5 | Keine Abplatzungen, keine Risse |
| Nach Abkühlung | 6,5 | Feines Risswerk erkennbar |
| Nach 24 Stunden | 6,5 | Feines Risswerk erkennbar |
| Nach 36 Stunden | 6,5 | Feines Risswerk erkennbar |
| Nach 1 Woche | 6,5 | Feines Risswerk erkennbar |

Der Temperaturverlauf in den Würfeln war wie folgt:

| In Minuten | Temperatur in °C | | |
|---|---|---|---|
| | 10 mm | 25 mm | 40 mm |
| 30 | 160 | 110 | 50 |
| 60 | 300 | 195 | 100 |
| 120 | 440 | 300 | 110 |

### Beispiel 6:

Es wurde analog Vergleichsbeispiel 1 verfahren und ein Frischbeton mit folgenden Bestandteilen erstellt.

| | |
|---|---|
| Zement | 11,76 Gew.-% |
| Flugasche | 2,65 Gew.-% |
| WB-Wert | 0,63 |
| Luftporenmittel | 0,01 Gew.-% |
| Mikrosilika | 0,35 Gew.-% |
| Polypropylenfasern | 0,4 Gew.-%o |

Der Zuschlagstoff, der Rest, war ein Gemenge aus Bronzitfels und Dunit, deren chemische Zusammensetzung in den Beispielen 3 und 4 angegeben sind. Die Korngrößenverteilung war wie folgt:

| | | Bronzitfels | Dunit |
|---|---|---|---|
| | 0 bis 4 mm | 9 Gew.-% | 12 Gew.-% |
| | 2 bis 8 mm | 3 Gew.-% | 5 Gew.-% |
| | 4 bis 16 mm | 12 Gew.-% | 13 Gew.-% |
| | 16 bis 32 mm | 10 Gew.-% | 13 Gew.-% |
| Festigkeit nach | 7 Tagen 19,8 | N/mm² | |
| | 28 Tagen 34,7 | N/mm² | |

Der Frischbeton wies nach ÖNORM B3303 ein Ausbreitmaß von 51 cm auf.

Die chemische Zusammensetzung der Zuschlagstoffe (Bronzitfels und Dunit) ist wie in den Beispielen 4 und 5 angeführt.

Der Gewichtsverlust und die Änderung des Aussehens der Würfel gegen die Temperatur und sodann gegen die Zeit sowie bei einer Abkühlung von 1200°C waren wie folgt:

| Temperatur °C | Gewichtsverlust Gew-% | Aussehen |
|---|---|---|
| 800 | 9,9 | Keine Abplatzungen, keine Risse |
| 1000 | 10,2 | Minimale Abplatzungen sichtbar |
| 1100 | 10,3 | Minimale Risse sichtbar |
| 1200 | 10,2 | Minimale Risse sichtbar |
| Nach Abkühlung | 10,1 | Feines Rissnetzwerk |
| Nach 24 Stunden | 10,1 | Feines Rissnetzwerk |
| Nach 36 Stunden | 10,1 | Feines Rissnetzwerk |
| Nach 1 Woche | 10,1 | Feines Rissnetzwerk |

Der Temperaturverlauf in den Würfeln war wie folgt:

| In Minuten | Temperatur in °C | | |
|---|---|---|---|
| | 30 mm | 50 mm | 100 mm |
| 30 | 170 | 110 | 150 |
| 60 | 295 | 200 | 95 |
| 120 | 440 | 300 | 110 |

Aus Gründen der Vergleichbarkeit wurden alle angeführten Frischbetone mit Portlandzement, da dieser bevorzugt verwendet wird, erstellt, wohingegen auch Betone mit anderen Zementen, wie sie zur Zeit selbst nicht für bestimmte Bauwerke und Zwecke zugelassen sind, beispielsweise Kalziumaluminatzement (CAC), erprobt wurden, wobei analoge oder wesentlich höhere Festigkeitswerte und noch bessere Ergebnisse erhalten wurden.

Vergleichsbeispiel 1 zeigt, dass ein Festbeton mit karbonatischen Bestandteilen bereits bei 800°C Abplatzungen aufweist und die Risse zunehmen, wobei sodann nach Abkühlung Kalziumoxidzerfall eintritt. Ein derartiger Beton wird für brandgefährdete Bauteile und Abschnitte, insbesondere wegen der schlechten Eigenschaften, besonders beachtet werden müssen, wobei insbesondere neben der starken Schrumpfung und Rissbildung die Abspaltung von Kohlendioxid im Temperaturbereich von etwa 800°C bis 1000°C und die Gefahr der dadurch mitbedingten Entwicklung von giftigen und besonders gefährlichen Kohlenmonoxid sowie die Entwicklung von stark ätzenden Kalziumoxid bzw. bei Wasserzutritt die stark exotherme Entwicklung von ätzendem Kalziumhydroxid und die dadurch hervorgerufenen Gefährdungen für die Rettungs- und Löschmannschaften als sehr negative Faktoren beobachtet und erwähnt werden.

Ein Beton mit einem Zuschlagstoff mit 80,0 Gew.-% Quarz weist insbesondere bei 1200°C noch schlechtere Eigenschaften als ein Festbeton mit aus vielen verschiedenen Gesteinen bestehender Flussschotter auf, da bei 1200°C bereits Risse auftreten, die den Würfel durchmessen, so dass ein Zerfall des Würfels erkennbar ist. Dieser Zerfall ist auf die spontane Quarzumwandlung und Christobalit-Neubildung zurückzuführen.

Der Festbeton mit einem Zuschlagstoff aus Magnesiumeisenhydrosilikat (Dunit) weist wesentlich bessere Eigenschaften auf. Einerseits können durch besondere, beispielsweise magnetische, Aufbereitungsschritte verschiedene Magnesiumeisensilikat und Magnesiumeisenhydrosilikate getrennt gewonnen werden, wobei beispielsweise eine Dunit-Fraktion angereichert wird. Dieser Zuschlagstoff oder seine beliebig einstellbaren Mischungen sind beispielsweise, wie bereits ausgeführt, leichter als Bronzit und besitzen mehr kristallin eingebautes Lösch- und Kühlwasser. Sie weisen daher ebenfalls hervorragende Eigenschaften bei thermischer Beanspruchung auf. Ein Beton mit Dunit als auch mit Bronzit und sämtlichen Zwischenstufen weist hervorragende Temperaturbeständigkeit auf, wobei gleichzeitig hohe Festigkeiten vorliegen, und die Erwärmung des Probekörpers über die Zeit bei geringeren Temperaturen langsamer erfolgt als bei herkömmlichem Beton. Bei einem Beton mit Dunit oder dessen Gemischen als Zuschlagstoff liegt in der Brandanfangsphase, die nicht dargelegt wurde, ebenfalls eine geringere Erwärmung vor, als vergleichsweise bei einem Beton mit herkömmlichen Zuschlagstoffen.

Aufgrund der angegebenen Ausbreitmaße kann der Rückschluß gezogen werden, dass derartige Betone sowohl als Fließbeton, Pumpbeton, Spritzbeton usw., u. zw. im Naß- als auch im Trockenspritzverfahren, geeignet sind. Die erfindungsgemäßen Betone sind somit besonders für Baukonstruktionen geeignet, die auch im Brandfall längerfristig eine höhere Festigkeit aufweisen sollen. Beispiele hierfür sind Tunnels aber auch Hochbauten, wobei eine Auskleidung oder Umhüllung, vorzugsweise mit Spritzbeton, erfolgen kann, so dass die Hitzeeindringtiefe und die Tiefe der Materialschädigung kleiner ist und auch eine allfällige Einsturzgefährdung erst nach wesentlich längeren Zeiträumen gegeben ist, wobei, wie bereits ausgeführt, da kein Kohlendioxid bzw. daraus entstehendes Kohlenmonoxid vorliegt, sowohl die Vergiftungs- als auch die Explosionsgefahr vermindert werden kann.

Ein weiteres Beispiel für den bevorzugten Einsatz der erfindungsgemäßen Festbetone sind hitzebeständige Böden, tragende Konstruktionsteile, brandbeständige Trennwände, Stiegenhäuser von Gebäuden, insbesondere öffentlichen Gebäuden. Auch sind sämtliche Gebäude, die einer Brandgefahr ausgesetzt sind, wie beispielsweise Laboratorien, insbesondere auch Industriebauten für thermische Prozesse, Brenn- und Schmelzvorgänge, für Raffinerien und Verteidigungsanlagen, ein bevorzugter Einsatzort für die erfindungsgemäßen Betone.

Die erfindungsgemäßen Frischbetone eignen sich auch als Transportbeton, so dass der breite konventionelle Einsatz gewährleistet ist.

Obwohl die Erfindung anhand der Beispiele mit typischen Portlandzementqualitäten erläutert wurden, sind auch andere Zemente, wie z. B. Kalzium-Aluminat-Zemente (CAC), allerdings mit einem W/B-Wert 0,35 bis 0,60 oder Alinitzement oder andere Spezialzemente mit verschiedenen latenthydraulisch oder eigenschaftsoptimierenden Zusätzen, wie Gesteins- und Schlackenmehle, Silicastaub, mikronisierte Mineralstoffe od. dgl., geeignet.

Obwohl in den Beispielen lediglich Polypropylenfasern angeführt wurden, können auch Fasern aus anderen Stoffen, wie verschiedene Polymere, Zellstoff, Papier, eingesetzt werden, wenn dieselben sicherstellen, dass Wasserdampf oder auch gasförmiges Wasser aus dem Inneren des Festbetons austreten können, so dass kein Druckaufbau im Festbeton erfolgt und eine Zerstörung desselben aufgrund des expandierenden Wassers vermieden werden kann.

## Patentansprüche

1. Festbeton, insbesondere Betonbauteil, mit einer Mischung 10,0 Gew. % bis 25,0 Gew-% berechnet ohne Bewehrung, abgebundenen hydraulischen und/oder latenthydraulischen Bindemitteln, z. B. Portlandzement, Hochofenzement 75,0 Gew.-% bis 90,0 Gew.-% berechnet ohne Bewehrung, Zuschlagstoffe, Fasern aus Thermoplasten, Polymeren, Zellstoff, Papier, gegebenenfalls Verflüssigern, Dispergatoren, und gegebenenfalls mit einer Bewehrung, **dadurch gekennzeichnet, dass** die Summe der Zuschlagstoffe folgende chemische Zusammensetzung
| | | |
|---|---|---|
| MgO 25,0 | bis 50,0 Gew.-%, | insbesondere 30,0 bis 40,0 Gew.-% |
| SiO₂ 30,0 | bis 55,0 Gew.-%, | insbesondere 40,0 bis 45,0 Gew.-% |
| Fe₂O₃ 5,0 | bis 15,0 Gew.-% | |
| Cr₂O₃ | max. 1,0 Gew.-% | |
| Al₂O₃ | max. 1,0 Gew.-% | |
| freies SiO₂ als Quarz Beimengungen | max. 5,0 Gew.-%, Rest | insbesondere max. 1,0 Gew.-% |
| und Fasern | von 0,3 Gew.-‰ bis 3,0 Gew.-‰, | |
| | insbesondere 0,4 Gew.- ‰ bis 1,0 Gew.- ‰ | |
aufweist.

2. Festbeton, insbesondere Betonbauteil, nach Anspruch 1, **dadurch gekennzeichnet, dass** zumindest ein Teil, insbesondere 80,0 Gew.-% bis 100,0 Gew-%, der Zuschlagstoffe folgende Zusammensetzung
| | | |
|---|---|---|
| MgO | | 30,0 bis 40,0 Gew.-% |
| SiO2 | | 50,0 bis 55,0 Gew.-% |
| Cr₂O₃ | max. 1,0 Gew.-% | |
| Al₂O₃ | max. 1,0 Gew.-% | |
| freies SiO₂ als Quarz Beimengungen | max. 5,0 Gew.-%, | insbesondere max. 1,0 Gew.-% |
| | Rest | |
aufweist.

3. Festbeton, insbesondere Betonbauteil, nach Anspruch 1 oder 2, **dadurch gekennzeichnet, dass** zumindest ein Teil, insbesondere 80,0 Gew.-% bis 100,0 Gew-%, der Zuschlagstoffe folgende Zusammensetzung
| | | |
|---|---|---|
| MgO | 35,0 bis 50,0 Gew.-% | |
| SiO₂ | 45,0 bis 55,0 Gew.-% | |
| Fe₂O₃ | 5,0 bis 15,0 Gew.-% | |
| Cr₂O₃ | max. 1,0 Gew.-% | |
| Al₂O₃ | max. 1,0 Gew.-% | |
| freies SiO₂ als Quarz | max. 5,0 Gew.-%, | insbesondere max. 1,0 Gew.-% |
| Beimengungen | Rest | |
aufweist.

4. Festbeton, insbesondere Betonbauteil, nach Anspruch 1, 2 oder 3, **dadurch gekennzeichnet, dass** zumindest ein Teil, insbesondere 80,0 Gew.-% bis 100,0 Gew.-%, der Zuschlagstoffe 2,5 Gew.-% bis 15,0 Gew.-% Kristallwasser enthalten.

5. Frischbeton zur Herstellung von Festbeton, insbesondere eines Betonbauteiles, mit einer Mischung mit 8,0 Gew.-% bis 20,0 Gew-%, insbesondere 12,0 Gew.-% bis 18,0 Gew.-% hydraulischen und/oder latenthydraulischen Bindemitteln, z. B. Portlandzement, Hochofenzement, 75,0 Gew.-% bis 92,0 Gew-%, Zuschlagstoffen, Fasern 0,3 Gew.- ‰ bis 3,0 Gew.- ‰ und einen W/B-Wert 0,40 bis 0,70, vorzugsweise 0,50 bis 0,65, aufweist, **dadurch gekennzeichnet, dass** die Summe der Zuschlagstoffe folgende Zusammensetzung
| | | |
|---|---|---|
| MgO | 25,0 bis 50,0 Gew.-%, | insbesondere 30,0 bis 40,0 Gew.-% |
| SiO₂ | 30,0 bis 55,0 Gew.-%, | insbesondere 40,0 bis 45,0 Gew.-% |
| Fe₂O₃ | 5,0 bis 15,0 Gew.-% | |
| Cr₂O₃ | max. 1,0 Gew.-% | |
| Al₂O₃ | max. 1,0 Gew.-% | |
| freies SiO₂ als Quarz Beimengungen | max.5,0 Gew.-%, Rest | insbesondere max. 1,0 Gew.-% |
| und Fasern | von 0,3 Gew.-‰ bis 3,0 Gew.-‰, | insbesondere 0,4 Gew.- ‰ bis 1,0 Gew.- ‰ |
aufweist.

6. Frischbeton zur Herstellung von Festbeton, insbesondere eines Betonbauteiles, nach einem der Ansprüche 1 bis 5, **dadurch gekennzeichnet, dass** zumindest ein Teil, insbesondere 80,0 Gew.-% bis 100,0 Gew-%, der Zuschlagstoffe folgende Zusammensetzung
| | | |
|---|---|---|
| MgO | 30,0 bis 40,0 Gew.-% | |
| SiO₂ | 50,0 bis 55,0 Gew.-% | |
| Fe₂O₃ | 8,0 bis 13,0 Gew.-% | |
| Cr₂O₃ | max. 1,0 Gew.-% | |
| Al₂O₃ | max. 1,0 Gew.-% | |
| freies SiO₂ als Quarz | max. 5,0 Gew.-%, | insbesondere max. 1,0 Gew.-% |
| Beimengungen | Rest | |
aufweist.

7. Frischbeton zur Herstellung von Festbeton, insbesondere eines Betonbauteiles, nach einem der Ansprüche 1 bis 6, **dadurch gekennzeichnet, dass** zumindest ein Teil, insbesondere 80,0 Gew.-% bis 100,0 Gew-%, der Zuschlagstoffe folgende Zusammensetzung
| | | |
|---|---|---|
| MgO | 35,0 bis 50,0 Gew.-% | |
| SiO₂ | 45,0 bis 55,0 Gew.-% | |
| Fe₂O₃ | 5,0 bis 15,0 Gew.-% | |
| Cr₂O₃ | max. 1,0 Gew.-% | |
| Al₂O₃ | max. 1,0 Gew.-% | |
| freies SiO₂ als Quarz | max. 5,0 Gew.-%, | insbesondere max. 1,0 Gew.-% |
| Beimengungen | Rest | |
aufweist.

8. Frischbeton zur Herstellung von Festbeton, insbesondere eines Betonbauteiles, nach einem der Ansprüche 1 bis 7, **dadurch gekennzeichnet, dass** zumindest ein Teil, insbesondere 80,0 Gew.-% bis 100,0 Gew.-%, der Zuschlagstoffe 2,5 Gew.-% bis 15,0 Gew.-% Kristallwasser enthalten.

9. Verwendung eines Festbetons nach einem der Ansprüche 1 bis 4 und/oder eines Frischbetons nach einem der Ansprüche 5 bis 8 zur Herstellung eines Bauteiles mit höherer Temperaturbeständigkeit.

## Claims

1. Hardened concrete, in particular concrete structural component, comprising a mixture of 10.0 % by weight to 25.0 % by weight, calculated without reinforcement, of set hydraulic and/or latent hydraulic binding agents, for example Portland cement, blast furnace cement, 75.0 % by weight to 90.0 % by weight, calculated without reinforcement, aggregates, thermoplastic fibres, polymers, cellulose, paper, optionally liquefiers, dispersants, and optionally comprising a reinforcement, **characterised in that** the sum of the aggregates has the following chemical composition
| | |
|---|---|
| MgO | 25.0 to 50.0 % by weight in particular 30.0 to 40.0 % by weight |
| SiO₂ | 30.0 to 55.0 % by weight in particular 40.0 to 45.0 % by weight |
| Fe₂O₃ | 5.0 to 15.0 % by weight |
| Cr₂O₃ | max. 1.0 % by weight |
| Al₂O₃ | max. 1.0 % by weight |
| free SiO₂ as quartz Admixtures and | max. 5.0 % by weight, in particular max. 1.0 % by weight remainder |
| fibres | from 0.3 ‰ by weight to 3.0 ‰ by weight, in particular 0.4 ‰ by weight to 1.0 ‰ by weight. |

2. Hardened concrete, in particular concrete structural component according to claim 1, **characterised in that** at least a part, in particular 80.0 % by weight to 100.0 % by weight of the aggregates has the following composition
| | |
|---|---|
| MgO | 30.0 to 40.0 % by weight |
| SiO₂ | 50.0 to 55.0 % by weight |
| Fe₂O₃ | 8.0 to 13.0 % by weight |
| Cr₂O₃ | max. 1.0 % by weight |
| Al₂O₃ free SiO₂ | max. 1.0 % by weight |
| as quartz Admixtures | max. 5.0 % by weight, in particular max. 1.0 % by weight remainder |

3. Hardened concrete, in particular concrete structural component according to claim 1 or 2, **characterised in that** at least a part, in particular 80.0 % by weight to 100.0 % by weight of the aggregates has the following composition
| | |
|---|---|
| MgO | 35.0 to 50.0 % by weight |
| SiO₂ | 45.0 to 55.0 % by weight |
| Fe₂O₃ | 5.0 to 15.0 % by weight |
| Cr₂O₃ | max. 1.0 % by weight |
| Al₂O₃ | max. 1.0 % by weight |
| free SiO₂ as quartz Admixtures | max. 5.0 % by weight, in particular max. 1.0 % by weight remainder |

4. Hardened concrete, in particular concrete structural component according to claim 1, 2 or 3, **characterised in that** at least a part, in particular 80.0 % by weight, to 100.0 % by weight, of the aggregates contains 2.5 % by weight to 15.0 % by weight water of crystallisation.

5. Fresh concrete for producing hardened concrete, in particular a concrete structural component, comprising a mixture with 8.0 % by weight to 20.0 % by weight, in particular 12.0 % by weight to 18.0 % by weight hydraulic and/or latent hydraulic binding agents, for example Portland cement, blast furnace cement, 75.0 % by weight to 92.0 % by weight aggregates, fibres 0.3 ‰ by weight to 3.0 ‰ by weight and a W/B value of 0.40 to 0.70, preferably 0.50 to 0.65, **characterised in that** the sum of the aggregates has the following composition
| | |
|---|---|
| MgO | 25.0 to 50.0 % by weight in particular 30.0 to 40.0 % by weight |
| SiO₂ | 30.0 to 55.0 % by weight in particular 40.0 to 45.0 % by weight |
| Fe₂O₃ | 5.0 to 15.0 % by weight |
| Cr₂O₃ | max. 1.0 % by weight |
| Al₂O₃ | max. 1.0 % by weight |
| free SiO₂ as quartz Admixtures and | max. 5.0 % by weight, in particular max. 1.0 % by weight remainder |
| fibres | from 0.3 ‰ by weight to 3.0 ‰ by weight, in particular 0.4 ‰ by weight to 1.0 ‰ by weight. |

6. Fresh concrete for producing hardened concrete, in particular a concrete structural component according to any one of claims 1 to 5, **characterised in that** at least a part, in particular 80.0 % by weight to 100.0 % by weight of the additives has the following composition
| | |
|---|---|
| MgO | 30.0 to 40.0 % by weight |
| SiO₂ | 50.0 to 55.0 % by weight |
| Fe₂O₃ | 8.0 to 13.0 % by weight |
| Cr₂O₃ | max. 1.0 % by weight |
| Al₂O₃ free SiO₂ | max. 1.0 % by weight |
| as quartz Admixtures | max. 5.0 % by weight, in particular max. 1.0 % by weight remainder |

7. Fresh concrete for producing hardened concrete, in particular a concrete structural component, according to any one of claims 1 to 6, **characterised in that** at least a part, in particular 80.0 % by weight to 100.0 % by weight of the aggregates has the following composition
| | |
|---|---|
| MgO | 35.0 to 50.0 % by weight |
| SiO₂ | 45.0 to 55.0 % by weight |
| Fe₂O₃ | 5.0 to 15.0 % by weight |
| Cr₂O₃ | max. 1.0 % by weight |
| Al₂O₃ | max. 1.0 % by weight |
| free SiO₂ as quartz Admixtures | max. 5.0 % by weight, in particular max. 1.0 % by weight remainder |

8. Fresh concrete for producing hardened concrete, in particular a concrete structural component according to any one of claims 1 to 7, **characterised in that** at least one part, in particular 80.0 % by weight to 100.0 % by weight of the aggregates contains 2.5 % by weight to 15.0 % by weight water of crystallisation.

9. Use of a hardened concrete according to any one of claims 1 to 4 and/or of a fresh concrete according to any one of claims 5 to 8 for producing a structural component with a relatively high temperature stability.

## Revendications

1. Béton durci, en particulier pièce de construction de béton, ayant un mélange de 10,0% en poids à 25,0% en poids, calculé sans armature, de liants à prise hydraulique et/ou hydraulique latente, par exemple le ciment de Portland, le ciment de haut fourneau, de 75% en poids à 90,0% en poids, calculé sans armature, d'agrégats, de fibres en thermoplastes, de polymères, de cellulose, de papier, éventuellement d'agents de liquéfaction, de dispersants et éventuellement avec armature, **caractérisé en ce que** la somme des agrégats présente la composition chimique suivante:
| | |
|---|---|
| MgO | 25,0 à 50,0% en poids, en particulier 30,0 à 40,0% en poids |
| SiO₂ | 30,0 à 55,0% en poids, en particulier de 40,0 à 45,0% en poids |
| Fe₂O₃ | 5,0 à 15,0% en poids |
| Cr₂O₃ | max. 1,0% en poids |
| Al₂O₃ | max. 1,0% en poids |
| du SiO₂ libre sous forme de quartz Impuretés le reste | max. 5,0% en poids, en particulier max. 1,0% en poids |
| et fibres | de 0,3‰ en poids à 3,0‰ en poids, en particulier de 0,4‰ en poids à 1,0‰ en poids. |

2. Béton durci, en particulier pièce de construction de béton, selon la revendication 1, **caractérisé en ce qu'**au moins une partie, en particulier de 80,0% en poids à 100,0% en poids, des agrégats présente la composition suivante:
| | |
|---|---|
| MgO | 30,0 à 40,0% en poids |
| SiO₂ | 50,0 à 55,0% en poids |
| Fe₂O₃ | 8,0 à 13,0% en poids |
| Cr₂O₃ | max. 1,0% en poids |
| Al₂O₃ | max. 1,0% en poids |
| SiO₂ libre sous forme de quartz Impuretés le reste. | max. 5,0% en poids, en particulier max. 1,0% en poids |

3. Béton durci, en particulier pièce de construction de béton, selon la revendication 1 ou 2, **caractérisé en ce qu'**au moins une partie, en particulier de 80,0% en poids à 100,0% en poids, des agrégats présente la composition suivante:
| | |
|---|---|
| MgO | 35,0 à 50,0% en poids |
| SiO₂ | 45,0 à 55,0% en poids |
| Fe₂O₃ | 5,0 à 15,0% en poids |
| Cr₂O₃ | max. 1,0% en poids |
| Al₂O₃ | max. 1,0% en poids |
| SiO₂ libre sous forme de quartz | max. 5,0% en poids, en particulier max. 1,0% en poids |
| Impuretés | le reste. |

4. Béton durci, en particulier pièce de construction de béton, selon la revendication 1, 2 ou 3, **caractérisé en ce qu'**au moins une partie, en particulier 80,0% en poids à 100,0% en poids, des agrégats contient 2,5% en poids à 15,0% en poids d'eau de cristallisation.

5. Béton frais pour la fabrication de béton durci, en particulier d'une pièce de construction de béton, présentant un mélange avec 8,0% en poids à 20,0% en poids, en particulier 12,0% en poids à 18,0% en poids de liants hydrauliques et/ou hydrauliques latents, par exemple le ciment de Portland, le ciment pour haut fourneau, 75,0% en poids à 92,0% en poids, d'agrégats, de fibres 0,3‰ en poids à 3,0‰ en poids et une valeur W/B de 0,40 à 0,70, de préférence 0,50 à 0,65, **caractérisé en ce que** la somme des agrégats présente la composition suivante:
| | |
|---|---|
| MgO | 25,0 à 50,0% en poids, en particulier 30,0 à 40,0% en poids |
| SiO₂ | 30,0 à 55,0% en poids, en particulier 40,0 à 45,0% en poids |
| Fe₂O₃ | 5,0 à 15,0% en poids |
| Cr₂O₃ | max. 1,0% en poids |
| Al₂O₃ | max. 1,0% en poids |
| SiO₂ libre sous forme de quartz Impuretés le reste | max. 5,0% en poids, en particulier max. 1,0% en poids |
et des fibres de 0,3‰ en poids à 3,0‰ en poids, en particulier 0,4‰ en poids à 1,0‰ en poids.

6. Béton frais pour la fabrication de béton durci, en particulier d'une pièce de construction de béton, selon l'une des revendications 1 à 5, **caractérisé en ce qu'**au moins une partie, en particulier 80,0% en poids à 100,0% en poids des agrégats présente la composition suivante:
| | |
|---|---|
| MgO | 30,0 à 40,0% en poids |
| SiO₂ | 50,0 à 55,0% en poids |
| Fe₂O₃ | 8,0 à 13,0% en poids |
| Cr₂O₃ | max. 1,0% en poids |
| Al₂O₃ | max. 1,0% en poids |
| SiO₂ libre sous forme de quartz Impuretés le reste. | max. 5,0% en poids, en particulier max. 1,0% en poids |

7. Béton frais pour la fabrication du béton durci, en particulier d'une pièce de construction de béton, selon l'une des revendications 1 à 6, **caractérisé en ce qu'**au moins une partie, en particulier 80,0% en poids à 100,0% en poids, des agrégats présente la composition suivante:
| | |
|---|---|
| MgO | 35,0 à 50,0% en poids |
| SiO₂ | 45,0 à 55,0% en poids |
| Fe₂O₃ | 5,0 à 15,0% en poids |
| Cr₂O₃ | max. 1,0% en poids |
| Al₂O₃ | max. 1,0% en poids |
| SiO₂ libre sous forme de quartz Impuretés le reste. | max. 5,0% en poids, en particulier max. 1,0% en poids |

8. Béton frais pour la fabrication de béton durci, en particulier d'une pièce de construction de béton, selon l'une des revendications 1 à 7, **caractérisé en ce qu'**au moins une partie, en particulier 80,0% en poids à 100,0% en poids des agrégats contient 2,5% en poids à 15,0% en poids d'eau de cristallisation.

9. Utilisation d'un béton durci selon l'une des revendications 1 à 4 et/ou d'un béton frais selon l'une des revendications 5 à 8 pour la fabrication d'une pièce de construction offrant une résistance élevée à la température.
